Europäisches Patentamt

(19) European Patent Office

Office européen des brevets

(11) Publication number: **0 220 756**
**B1**

# (12) EUROPEAN PATENT SPECIFICATION

(45) Date of publication of the patent specification:
29.11.89

(21) Application number: 86201621.9

(22) Date of filing: 18.09.86

(51) Int. Cl.⁴: **G01N 3/08**, G01M 13/02

## (54) Device for testing closed loops of material.

(30) Priority: 27.09.85 NL 8502654

(43) Date of publication of application:
06.05.87 Bulletin 87/19

(45) Publication of the grant of the patent:
29.11.89 Bulletin 89/48

(84) Designated Contracting States:
AT BE CH DE FR GB IT LI LU NL SE

(56) References cited:
EP-A- 0 025 646
DE-A- 1 963 120
DE-A- 2 516 271
DE-A- 2 949 819
FR-A- 385 620
FR-A- 1 540 977
US-A- 1 749 297
US-A- 4 237 719

(73) Proprietor: DUNLOP-ENERKA B.V., Oliemolenstraat 2,
NL-9203 ZN Drachten(NL)

(72) Inventor: Spaans, Cornelis, Hendrik Marsmanlaan 25,
NL-2624 TJ Delft(NL)

(74) Representative: van der Beek, George Frans, Ir. et al,
Nederlandsch Octrooibureau Scheveningseweg 82 P.O.
Box 29720, NL-2502 LS 's-Gravenhage(NL)

## Description

The invention relates to a device for testing of closed looped belts such as endless conveyor belts, comprising a driving roller and a braked roller.

Such a device is known from DE-A 2 516 271, in which a device is described for testing of driving belts for tape recorders, pick-ups and so on. For these kinds of belts it is extremely important that it has such properties that no wow and flutter originates from these belts. For testing the belt of elastic material is arranged around two rollers and will adhere thereto by its own resiliency.

This device is not suitable for testing of larger belts such as conveyor belts. First of all these belts must be subjected to a pretensioning to approximate the conditions occurring during operation. Another feature of an endless belt which has to be tested is the place of welding together of the two ends. In the device according to DE-A 2 516 271 the belt is only subjected to bending in one direction. Because of the kind of belt tested there, this is not a drawback. However, testing conveyor belts in such a way does give false readings.

It is clear that the problems encountered at testing of conveyor belts do completely differ from the problems encountered at testing of relatively small belts used for driving of sound recording and playing apparatus. Because of this the invention aims to provide a device for testing of belts such as conveyor belts adapted to the requirements for testing such kinds of belts as described above.

According to the invention this aim is realized in that at least two neighbouring further rollers for changing the direction of movement of the belt are provided;

one of said further rollers being positioned such that the direction of movement of the belt is substantially reversed;

said further roller being positioned on a line symmetrical to two parts of the reversed belt for chaning the tension of the belt;

one of said further rollers being provided with a tensioning mechanism for changing the tension of the belt; and

the rotational axis of all rollers being parallel.

By using of a reversing roller the belt is subjected to bending loads in two directions. A further roller next to said reversing roller is necessary to realise the substantially reversing of the belt around the reversing roller. This is in contrast to the tensioning roller known from US-A 4 237 719 in which no substantial reversing is obtained, said roller only functioning to provide a pretension into the belt. Because of this with the device according to this specification it is not possible to subject the belt, and more particular the place where its ends are welded together, to ending forces in two directions. This means that an estimation has to be made for determining the load to which the weld can be subjected.

From DE-A 1 963 120 a testing device for wires is known. After being produced the wire is coiled to a reel. In the path to the reel a testing device is provided and arranged to only subject the wire to a tension over a limited part of its path. To obtain this, the wire is guided over several rollers. Although the direction of bending changes several times it is not meant to test the wire on bending because the wire is not a closed loop belt and no rollers are provided. The properties of the wire are equal in the plane perpendicular to its longitudinal axis. Furthermore no means are provided to prevent twisting of the wire between two rollers such that it can never be guaranteed that the wire is bent in different directions. Although the art of testing device is the same as with subject invention the article to be tested completely differs from the article which has to be tested according to subject invention with resulting differences in structure.

According to a preferred embodiment the further roller is embodied as the tensioning mechanism.

According to an advantageous further embodiment the braked roller is connected by means of a differential device, such as a planetary gear system to the driven roller. In this way the energy flow can be conveyed back from the braked roller to the driven roller while relatively compact device can also be used. This is particularly important if heavy conveyor belts in which high stresses occur have to be tested. Other devices would require a particularly complex construction.

According to a further advantageous embodiment the plane in which the central axis of the braked and driving rollers are located, is essentially horizontal and the tensioning roller is above this plane.

According to another advantageous embodiment of the device according to the invention a roller is provided effecting the course of the loop. In this way further operating loads can be simulated where a loop is bent at slight angle.

The invention will now be explained with reference to an example of an embodiment shown in the drawings, in which:

Fig. 1 shows a schematic front view of the device for testing closed loops of material;

Fig. 2 is a schematic diagram of the energy flow in the connection between driven roller and braked roller via the planetary gear system;

Fig. 3 shows a detail of Fig. 2;

Fig. 4a, 4b are diagrams in which the load on the belt is plotted against time for loads approaching the actual operating conditions, the testing according to the state of the art, and the testing according to the present invention respectively.

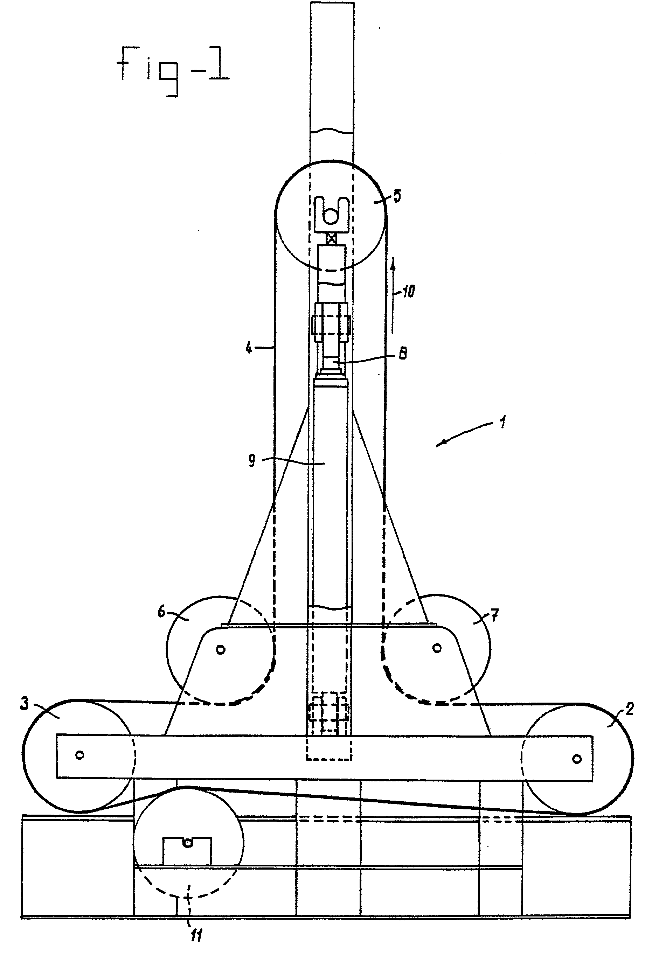

In Fig. 1 the device for testing closed loops of material such as endless conveyor belts is generally indicated by 1. It comprises a driven roller 2 and a braked roller 3. In order to maintain the tension in the conveyor belt 4, a tensioning roller 5 is present, on either side of which there are bypass rollers 6 and 7. The tensioning roller 5 is connected to a piston rod 8 which fits into a cylinder 9 of a hydraulic piston-cylinder assembly which is connected to a source of hydraulic fluid (not shown) in order to keep the tension of the conveyor belt 4 constant. Through the presence of the bypass rollers 6 and 7, the conveyor belt undergoes bending to both sides. The direction of travel of the conveyor belt is indicated by arrow 10. In addition, between the driven roller 2 and the braked roller 3, there can be a further roller 11, with which the tensioning angle of the conveyor belt can be changed.

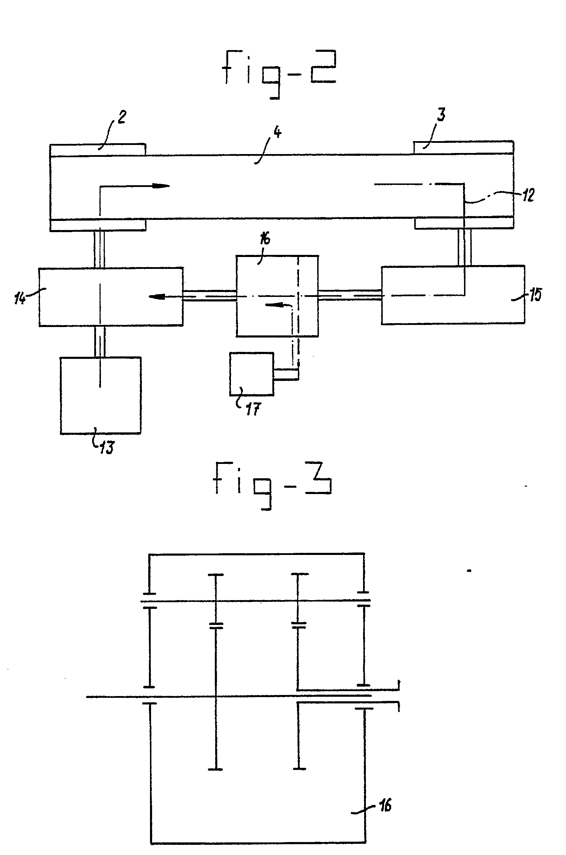

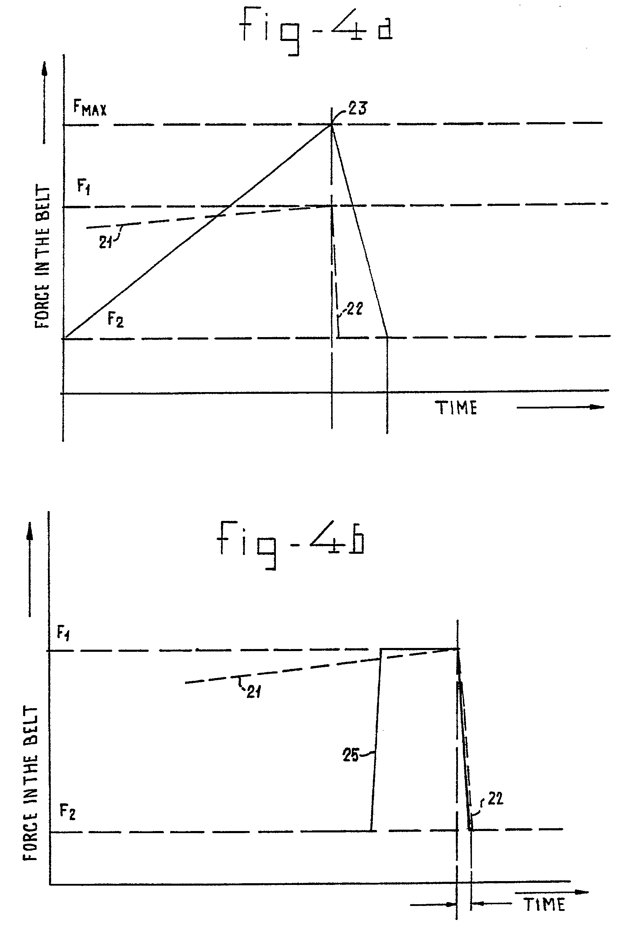

Fig. 2 shows very schematically the differential device as a planetary system 16, which connects the driven roller 2 to the braked roller 3, in order to convey back the energy released at the braked roller and to restrict the size of the device to acceptable proportions. In this figure, arrows 12 indicate the direction of the energy flow. By means of a right-angle transmission 14, an electric motor 13 drives the driven roller 2, and the latter drives the conveyor belt 4 to be tested, which in turn drives the braked roller 3. This braked roller 3, by means of a right-angle transmission 15, drives a planetary gear system 16, which with a variator 17 constitutes a differential system which is known per se. In this way the energy flow which is released at the braked roller is conveyed back to the driven drum 2 and through the control of the variator the braking action can be regulated. The planetary system is shown in greater detail in Fig. 3.

The device described works as follows:

A conveyor belt for testing is fitted round the various rollers and brought to a predetermined tension with the tensioning roller 5. Thereafter, the driven roller 2 is set in motion with electric motor 13. Depending on the testing, roller 3 is braked more or less: in the extreme case even to a maximum slippage of 2% for the purpose of measuring the coefficient of friction between braked roller 3 and the conveyor belt for testing. If the operation of the conveyor belt is simulated, there is only a slight creepage between this roller 3 and the conveyor belt 4.

In Fig. 4a, b the force experienced by the conveyor belt is plotted against time. The dotted line gives in both figures the tension during an actual operating situation.

Here, part 21 represents the lower part of the conveyor belt, and part 22 the driving drum. It appears that the tension from the driving drum increases gradually to a maximum up to the driving drum. Fig. 4a shows by solid lines the load in the device according to the state of the art, from which it can be seen that there is a particularly high peak 23, followed by a low load. This peak is caused by the cycle time when the two rollers move apart.

Fig. 4b shows by a solid line the change of the forces according to the present invention, where part 25 indicates the part on the braked roller. It can be seen that the load according to the present invention is much closer to the actual load than the load placed according to the state of the art.

It must be understood that the invention is described only with reference to preferred embodiments, and that various modifications can be made to it which are within the ability of anyone skilled in the state of the art.

## Claims

1. Device (1) for testing of closed loop belts (4), comprising a driving roller (2) and a braked roller (3), characterized in that, at least two neighbouring further rollers (5–7) for changing the direction of movement of the belt are provided;

– one of said further rollers (5) being positioned such that the direction of movement of the belt is substantially reversed;

– said further roller (5) being positioned on a line symmetrical to two parts of the reversed belt for changing the tension of the belt;

– one of said further rollers (5–7) being provided with a tensioning mechanism (8, 9) for changing the tension of the belt; and

– the rotational axis of all rollers (2–7) being parallel.

2. Device according to claim 1, wherein said further roller (5) is connected with said tensioning mechanism (8, 9).

3. Device according to one of the preceding claims, wherein the driving roller (2) and the braked roller (3) are connected to each other by means of a differential device (16).

4. Device according to claim 3, wherein a variator (17) is added to the differential device (16).

5. Device according to one of claims 2 to 4, wherein a first plane in which the driving (2) and braked (3) rollers are located is essentially horizontal and wherein said further roller (5) is in a second plane spaced above said first plane.

6. Device according to one of the preceding claims, wherein a roller (11) is provided effecting the further running of the closed loop.

## Patentansprüche

1. Vorrichtung (1) zum Prüfen von Endlosbändern (4) mit einer Antriebsrolle (2) und einer gebremsten Rolle (3), dadurch gekennzeichnet, daß mindestens zwei benachbarte weitere Rollen (5–7) zur Änderung der Bewegungsrichtung des Bandes vorgesehen sind, wobei

– eine der genannten weiteren Rollen (5) so angeordnet ist, daß die Bewegungsrichtung des Bandes im wesentlichen umgekehrt wird;

– die genannte weitere Rolle (5) auf einer zu zwei Abschnitten des umgekehrten Bandes symmetrischen Linie angeordnet ist;

– eine der genannten weiteren Rollen (5–7) mit einem Spannmechanismus (8, 9) zur Änderung der Spannung des Bandes versehen ist; und

– die Drehachsen aller Rollen (2–7) parallel sind.

2. Vorrichtung nach Anspruch 1, dadurch gekennzeichnet, daß die genannte weitere Rolle (5) mit dem genannten Spannmechanismus (8, 9) verbunden ist.

3. Vorrichtung nach einem der vorhergehenden Ansprüche, dadurch gekennzeichnet, daß die Antriebsrolle (2) und die gebremste Rolle (3) mittels einer Differentialeinrichtung (16) miteinander verbunden sind.

4. Vorrichtung nach Anspruch 3, dadurch gekennzeichnet, daß der Differentialeinrichtung (16) ein Variator (17) zugeordnet ist.

5. Vorrichtung nach einem der Ansprüche 2 bis 4, dadurch gekennzeichnet, daß eine erste Ebene, in der die Antriebsrolle (2) und die gebremste Rolle (3) liegen, im wesentlichen horizontal verläuft, und daß die genannte weitere Rolle (5) in einer oberhalb der genannten ersten Ebene in Abstand von dieser befindlichen zweiten Ebene liegt.

6. Vorrichtung nach einem der vorhergehenden Ansprüche, dadurch gekennzeichnet, daß eine den weiteren Verlauf der Endlosschleife beeinflussende Rolle (11) vorgesehen ist.

## Revendications

1. Dispositif (1) pour essayer des courroies (4) en boucle fermée, comprenant un galet d'entraînement (2) et un galet freiné (3), caractérisé en ce que sont disposés deux autres galets voisins (5–7) pour modifier le sens du déplacement de la courroie;

l'un desdits autres galets (7) étant positionné de telle façon que le sens de déplacement de la courroie est sensiblement inversé;

ledit autre galet (5) étant positionné sur une ligne symétrique aux deux parties de la courroie inversée,

l'un desdits autres galets (5–7) comportant un mécanisme de tension (8, 9) pour modifier la tension de la courroie; et

l'axe de rotation de tous les galets (2 à 7) étant parallèle.

2. Dispositif selon la revendication 1, dans lequel ledit autre galet (5) est relié audit mécanisme de tension (8, 9).

3. Dispositif selon l'une des revendications précédentes, dans lequel ledit galet d'entraînement (2) et ledit galet freiné (3) sont reliés l'un à l'autre au moyen d'un dispositif différentiel (16).

4. Dispositif selon la revendication 3, dans lequel un variateur (17) est ajouté au dispositif différentiel (16).

5. Dispositif selon l'une des revendications 2 à 4, dans lequel un premier plan dans lequel sont situés ledit galet d'entraînement (2) et ledit galet freiné (3) est essentiellement horizontal et dans lequel ledit autre galet (5) est dans un deuxième plan espacé au dessus dudit premier plan.

6. Dispositif selon l'une des revendications précédentes, dans lequel est disposé un galet (11) effectuant la poursuite de la course de la boucle fermée.

EP 0 220 756 B1

Fig-1

# Fig-2

**2**  **4**  **3**

**12**

**16**

**14**  **15**

**17**

**13**

# Fig-3

**16**

# Fig-4a

# Fig-4b